# FASCICULE DE BREVET EUROPEEN

(11) **EP 0 319 385 B1**
(45) Date de publication et mention de la délivrance du brevet: **18.10.1995**
(21) Numéro de dépôt: 88402986.9
(22) Date de dépôt: 28.11.1988
(51) Int. Cl.: B01D 53/34

(54) **Dispositif et procédé pour piéger les composés gazeux de métaux réfractaires et installation de pompage comportant le dispositif**
Vorrichtung und Verfahren zum Fixieren gasförmiger Verbindungen von hochschmelzenden Metallen und eine die Vorrichtung enthaltende Anlage zum Pumpen von Gasen
Device and process for trapping gaseous compounds of refractory metals and pumping plant containing the device

(30) Priorité: 30.11.1987 FR 8716575
(43) Date de publication de la demande: 07.06.1989
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Hirase, Ikuo, Tsucuba-Gun Ibaraki-Pref 300-26 (JP); Rufin, Denis, Tsucuba-Gun Ibaraki-Pref 300-26 (JP); Sumiya, Tooru, Kanagawa-Pref 253 (JP); Matsuura, Masamichi, Kanagawa-Pref 253 (JP)
(74) Mandataire: Vesin, Jacques

(56) Documents cités:
- EP-A- 192 064
- DD-A- 237 951
- FR-A- 161 676
- CHEMICAL ENGINEER's HANDBOOK, 5th ed., 1973; pp. 4.21-4.22

## Description

La présente invention concerne un dispositif pour piéger les composés gazeux de métaux réfractaires, et une installation de pompage comportant un tel dispositif.

Dans l'industrie des composants électroniques, en particulier, et dans les procédés de dépôt en phase vapeur, de nombreux dépôts de métaux réfractaires et de leurs siliciures sont réalisés à partir de composés gazeux de métaux réfractaires, comme W, Mo, Ti, sous forme de fluorures notamment.

Les effluents gazeux de ces procédés comportent en particulier des composés gazeux corrosifs (HF, F₂, ...) et des composés gazeux non réagis comme des fluorures de métaux réfractaires (WF₆, ...).

Ces effluents sont en général extraits des installations, de dépôt chimique en phase vapeur par exemple, par pompage dans des pompes à vide, notamment des pompes à huile, qui sont mécaniquement dégradés par ces effluents, et dont l'huile est également dégradée.

Des dispositifs de lavage des effluents d'absorption des gaz nocifs, de décomposition des composées gazeux utilisés jusqu'à présent se sont révélés insatisfaisants.

Le document DD-A-237951 décrit un dispositif comprenant une chambre de réaction pourvue d'un tube creux chauffé electriquement.

La présente invention concerne un dispositif pour le piégeage de ces composés par décomposition thermique, caractérisé en ce qu'il comporte au moins une enceinte de forme allongée disposée verticalement formée d'un corps cylindrique creux , fermé de façon étanche par un couvercle dans sa partie supérieure et par un fond creux dans sa partie inférieure, ladite enceinte étant garnie sur la majeure partie de la hauteur du corps d'un garnissage conducteur thermique laissant en son sein des espaces verticaux libres du haut en bas; ladite enceinte comportant un orifice d'entrée des gaz en dessous du bas du garnissage et un orifice de sortie des gaz au dessus du garnissage; ladite enceinte comportant dans sa partie haute un orifice de sortie des gaz et dans sa partie basse un orifice d'introduction des gaz; ladite enceinte étant munie de moyens de chauffage et éventuellement d'isolation thermique.

Un tel dispositif est particulièrement utile pour le traitement des effluents gazeux de procédés mettant en oeuvre des métaux réfractaires.

C'est pourquoi la présente invention concerne également une installation de pompage de ces gaz comportant un dispositif selon l'invention.

L'invention sera mieux comprise à la lecture de la description détaillée suivante et au vue des dessins annexés sur lesquels :
- la figure 1 représente une coupe shématique d'un dispositif selon l'invention;
- la figure 2 représente shématiquement, une installation de dépôt chimique en phase vapeur comportant un dispositif selon l'invention et des moyens d'analyse des effluents gazeux avant et après le dispositif selon l'invention;
- les figures 3 à 6 représentent les analyses spectrométriques mettant en évidence l'efficacité du dispositif selon l'invention.

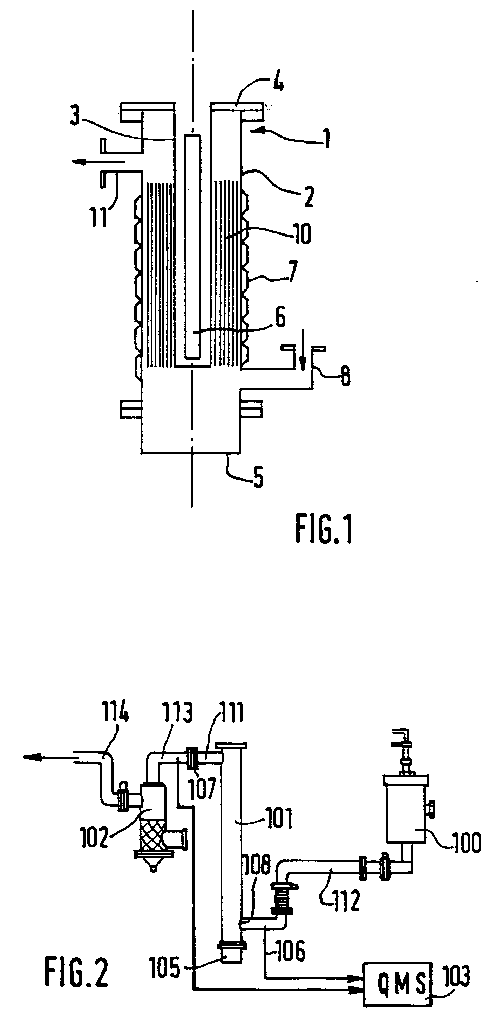

Comme cela apparait à la figure 1, une enceinte cylindrique (1) en alliage Ni-Cr disposée verticalement est constituée d'un corps creux (2) portant un couvercle annulaire (4) et un fond creux (5) formant collecteur. Le couvercle annulaire (4) ferme de façon étanche l'espace tubulaire limité par le corps principal (2) et un corps creux (3) auxiliaire coaxial.

Une résistance électrique (6) est disposé à l'intérieur du corps auxiliaire (3). Une autre résistance électrique (7) est enroulée autour du corps principal (2). Les résistances électriques (7) convenables sont connues sous le nom de Ribbon Heater. Ces résistances ont une puissance électrique de quelques kW. Les moyens d'alimentation de ces résistances ne sont pas représentés.

Ces résistances permettent de porter l'enceinte à des températures de l'ordre de 350° à 850°C.

Une feuille de cuivre de 0,5 mm d'épaisseur, enroulée pour former un cylindre d'une hauteur d'environ 1m, constitue le garnissage (10) disposé dans l'espace annulaire limité par les corps (2,3). La feuille de cuivre enroulée de façon à laisser libre des espaces annulaires verticaux ayant un épaisseur de l'ordre de 1 mm entre les enroulements de la feuille.

Un orifice (8) d'entrée de gaz est prévu en dessous du garnissage, et un orifice (11) de sortie des gaz au dessus du garnissage.

Bien que cela n'apparaisse pas sur la figure, l'enceinte peut en outre être pourvue de moyens d'isolation thermique, par exemple d'isolant en fibre de verre, disposé dans une gaine tout autour de l'enceinte.

De plus, en variante, le fond (5), qui ferme le bas de l'enceinte de façon étanche est amovible.

Sur la figure 2 est représentée une installation de dépôt en phase vapeur comportant un dispositif selon l'invention.

Les effluents d'une chambre de réaction (100) sont conduits, par une canalisation (112), au dispositif (101) selon l'invention, représenté ici muni de sa gaine isolante, et avec un fond collecteur (105) amovible. Ils sont introduits en bas de l'enceinte, par l'orifice d'introduction (108).

Après passage à travers le dispositif (101) selon l'invention, les effluents sont rejetés par l'orifice de sortie (111) et sont conduits par une canalisation (113) à un piège à huile (102) qu'ils traversent avant de parvenir par une canalisation (114) aux dispositifs de pompage non représentés.

Un analyseur spectromètre de masse quadripolaire (QMS) (103) prélève les gaz en un point (106) de la canalisation (112) situé avant le dispositif (101) et en un point (107) de la canalisation (113) situé après le dispositif (101).

Les gaz effluents de la chambre de réaction sont décomposés sur les feuilles de cuivre du garnissage à une température d'environ 500°C.

Les réactions suivantes sont des exemples de réactions pouvant se produire à la température (350°C-850°C) atteinte dans le dispositif :
WF₆ (g) + 3H₂ (g) ----- W (s) + HF (g)
2WF₆ (g) + 3SiH₄ (g) ----- WSiₓ (s) + 12HF (g)
SiH₄ (g) ----- Si (s) + 2H₂ (g)
2HF (g) + Cu (s) ----- CuF₂ (s) + H₂ (g)
Les métaux et solides se déposent sur le cuivre et les gaz sont pompés vers l'extérieur.

Les dépôts sur le cuivre peuvent être éliminés par des vibrations imposées au dispositif, et tombent par gravitation dans les espaces verticaux libres entre les feuilles du garnissage et sont collectés
dans le collecteur. Ceux qui sont entrainés par les gaz seront piégés dans des pièges à solide.

Comme cela apparaitra dans les exemples ci-après, les fluorures de tungstène peuvent être détruits à 999°C par un dispositif selon l'invention.

### Exemple :

On fait passer dans un dispositif selon l'invention des mélanges de WF₆, H₂ et SiH₄ dont la composition apparait dans les tableaux suivants.

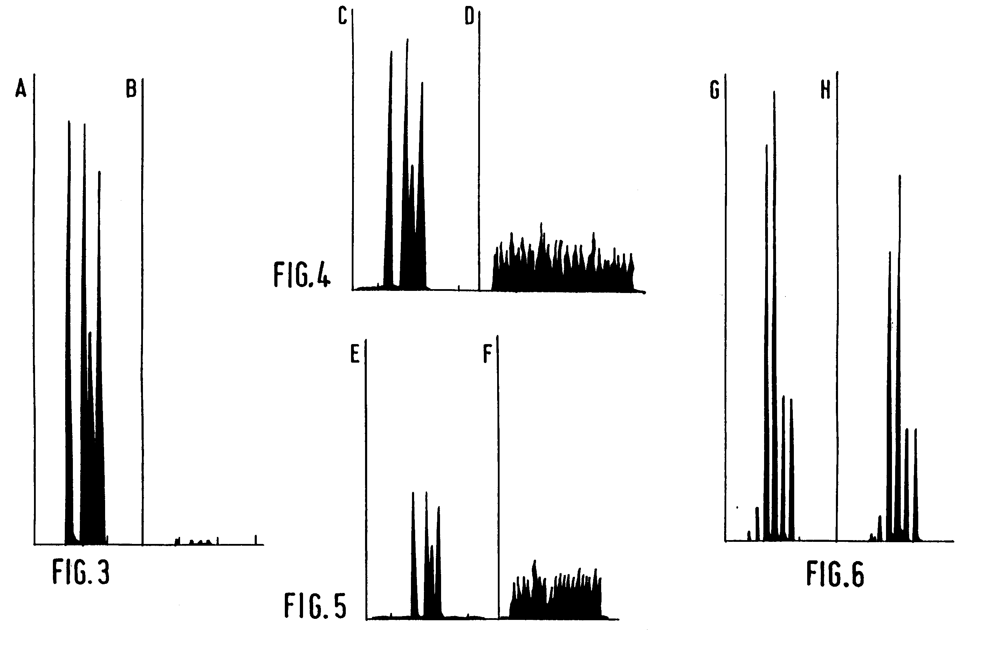

Les analyses spectrométriques de WF₅ + (A à F) et de SiH₄ + (G,H) correspondantes sont représentées aux figures 3 à 6.

| SPECTRE | NF cm³ | H₂ cm³ | SiH₄ cm³ | AVANT SENSIBILITE | APRES SENSIBILITE |
|---|---|---|---|---|---|
| A | 5 | 0 | 0 | 10⁻⁹ | / |
| B | 5 | 0 | 0 | / | 10⁻⁹ |
| C | 5 | 500 | 0 | 10⁻⁹ | / |
| D | 5 | 500 | 0 | / | 10⁻¹⁰ |
| E | 5 | 0 | 100 | 10⁻⁹ | / |
| F | 5 | 0 | 100 | / | 10⁻¹⁰ |
| G | 0 | 950 | 100 | 10⁻⁷ | / |
| H | 0 | 950 | 100 | / | 10⁻⁷ |

Pour les essais A-B et C-D, plus de 99% du WF₆ injecté est piégé sous forme de W (s).

Pour les essais E-F, 99 % du WF₆ gazeux est piégé sous forme de WSiₓ (s).

Pour les essais G-H, 20 % du SiH₄ est piégé sous forme de Si (s).

Des pompes rotary pourvues d'huile minérale usuelle ont été utilisées pendant deux ans à la sortie d'un réacteur à parois froide dans un procédé de dépôt chimique en phase gazeuse de W, WSiₓ sans que l'huile ait due être changée.

## Revendications

1. Dispositif pour piéger les composés gazeux de métaux réfractaires par décomposition thermique, caractérisé en ce qu'il comporte au moins une enceinte (1) de forme allongée disposée verticalement formée d'un corps cylindrique creux (2), fermé de façon étanche par un couvercle annulaire (4) dans sa partie supérieure et par un fond creux (5) collecteur dans sa partie inférieure, ladite enceinte étant garnie sur la majeure partie de la hauteur du corps d'un garnissage (10) conducteur thermique laissant eu son sein des espaces verticaux libres du haut en bas; ladite enceinte comportant un orifice d'entrée (8) des gaz en dessous du bas du garnissage et un orifice de sortie (11) des gaz au dessus du garnissage, ladite enceinte étant munie de moyens de chauffage (6, 7), tandis que le fond collecteur (5) est situé en dessous de l'orifice (8).

2. Dispositif selon la revendication 1, caractérisé en ce que le garnissage (10) est constitué d'au moins une feuille métallique enroulée formant un cylindre parallèle à un corps de l'enceinte (1) et de diamètre extérieur sensiblement égal au diamètre intérieur du corps (2).

3. Dispositif selon la revendication 1 ou 2, caractérisé en ce que le garnissage est un cylindre creux et en ce que l'enceinte comporte un corps cylindrique creux (3) auxiliaire, fermé dans sa partie basse sensiblement de même hauteur que celle du garnissage, logé sur l'axe de l'enceinte dans l'espace libre du garnissage cylindrique (10), le couvercle (4) de l'enceinte annulaire fermant de façon étanche l'enceinte.

4. Dispositif selon l'une des revendications 1 à 3, caractérisé en ce que le garnissage est constitué d'une feuille de cuivre.

5. Dispositif selon l'une des revendications 1 à 4, caractérisé en ce que la hauteur du garnissage est d'environ 1m, en ce que le diamètre intérieur de l'enceinte est d'environ 0,20m et le diamètre du corps auxiliaire est de l'ordre de 0,08m.

6. Dispositif selon l'une des revendications 1 à 5, caractérisé en ce que la feuille de cuivre a une épaisseur d'environ 0,5mm et en ce que les espace libres entre les feuilles ont une épaisseur de l'ordre du mm.

7. Dispositif selon l'une des revendications 1 à 6, caractérisé en ce que les moyens de chauffage sont constitués d'une résistance électrique (3) placée dans le corps auxiliare et/ou d'une résistance électrique enroulée à l'extérieur du corps principal (7).

8. Dispositif selon l'une des revendications 1 à 7, caractérisé en ce que le fond creux (5) de l'enceinte est amovible.

9. Dispositif selon l'une des revendications 1 à 8, caractérisé en ce que l'enceinte (1) est en alliage Ni-Cr.

10. Dispositif selon l'une des revendications 1 à 9, caractérisé en ce que l'enceinte est munie de moyens d'isolation thermique.

11. Installation de pompage des gaz dans un procédé mettant en oeuvre des composés gazeux de métaux réfractaires notamment un procédé de dépôt chimique en phase vapeur, caractérisé en ce qu'elle comporte un dispositif selon l'une des revendications 1 à 10.

12. Procédé cour le piègeage de composés gazeux de métaux réfractaires caractérisé an ce qu'on introduit lesdits composés gazeux par le bas d'une enceinte de forme allongée disposée verticalement formée d'un corps cylindrique creux et munie d'un garnissage conducteur thermique, on amène les composés gazeux au contact dudit garnissage, la température de l'enceinte étant amenée à une valeur comprise entre 350°C et 850°C. et on rejette les gaz effluents obtenus par un orifice disposé au dessus dudit garnissage.

13. Procédé selon la revendication 12 caractérisé en ce que lait garnissage est constitué d'au moins une feuille de cuivre.

14. Procédé selon l'une des revendications 12 au 13, caractérisé en ce que les métaux réfractaires constituant lesdits composés gazeux sont W, Mo, Ti.

15. Procédé selon l'une des revendications 12 à 14 caractérisé en ce que lesdits composés gazeux sont des fluorures de W, Mo ou Ti.

16. Procédé selon l'une des revendications 12 à 15 caractérisé en ce qu'on conduit lesdits gas effluents dans un piége à huile.

## Claims

1. Device for trapping gaseous compounds of refractory metals by thermal decomposition, characterised in that it has at least one enclosure (1), elongate in shape, disposed vertically and formed from a hollow cylindrical body (2), closed in an airtight manner by an annular cover (4) at its top and by a hollow collection base (5) at its bottom, the said enclosure being lined over most of the height of the body with a heat-conducting lining (10) leaving within it free vertical spaces running from top to bottom; the said enclosure having a gas inlet orifice (8) below the bottom of the lining and a gas outlet orifice (11) above the lining, the said enclosure being provided with heating means (6, 7), while the collection base (5) is situated below the orifice (8).

2. Device according to Claim 1, characterised in that the lining (10) consists of at least one coiled metal sheet forming a cylinder parallel to a body of the enclosure (1) and whose external diameter is substantially equal to the internal diameter of the body (2).

3. Device according to Claim 1 or 2, characterised in that the lining is a hollow cylinder and in that the enclosure has an auxiliary hollow cylinder (3), closed in its bottom part, substantially of the same height as the lining, housed on the axis of the enclosure in the free space of the cylindrical lining (10), the cover (4) of the annular enclosure closing off the enclosure in an airtight manner.

4. Device according to one of Claims 1 to 3, characterised in that the lining consists of a copper sheet.

5. Device according to one of Claims 1 to 4, characterised in that the height of the lining is approximately 1 m, in that the internal diameter of the enclosure is approximately 0.20 m and the diameter of the auxiliary body is around 0.08 m.

6. Device according to one of Claims 1 to 5, characterised in that the copper sheet is approximately 0.5 mm thick and in that the free spaces between the sheets are around one millimetre thick.

7. Device according to one of Claims 1 to 6, characterised in that the heating means consist of an electrical resistance (3) placed in the auxiliary body and/or an electrical resistance wound on the outside of the main body (7).

8. Device according to one of Claims 1 to 7, characterised in that the hollow base (5) of the enclosure is removable.

9. Device according to one of Claims 1 to 8, characterised in that the enclosure (1) is made of a Ni-Cr alloy.

10. Device according to one of Claims 1 to 9, characterised in that the enclosure is provided with thermal insulation means.

11. Installation for pumping gases in a process using gaseous compounds of refractory metals, notably a chemical vapour deposition process, characterised in that it includes a device according to one of Claims 1 to 10.

12. Method for trapping gaseous compounds of refractory metals, characterised in that the said gaseous compounds are introduced through the bottom of an enclosure, elongate in shape, disposed vertically and formed from a hollow cylindrical body and provided with a heat-conducting lining, the gaseous compounds are brought in contact with the said lining, the temperature of the enclosure being brought to a value of between 350°C and 850°C, and the effluent gases obtained are discharged through an orifice disposed above the said lining.

13. Method according to Claim 12, characterised in that the said lining consists of at least one copper sheet.

14. Method according to one of Claims 12 or 13, characterised in that the refractory metals forming the said gaseous compounds are W, Mo, Ti.

15. Method according to one of Claims 12 to 14, characterised in that the said gaseous compounds are W, Mo or Ti fluorides.

16. Method according to one of Claims 12 to 15, characterised in that the said effluent gases are channelled into an oil trap.

## Patentansprüche

1. Vorrichtung zum Einfangen gasförmiger Verbindungen hochschmelzender Metalle mittels Thermolyse, dadurch gekennzeichnet, daß die Vorrichtung zumindest einen langgestreckten, vertikal angeordneten, von einem zylindrischen Hohlkörper (2) gebildeten Behälter (1) umfaßt, der oben mittels eines ringförmigen Deckels (4) und unten mittels eines hohlen Sammelbodens (5) dicht verschlossen ist, daß der Behälter über den größten Teil der Höhe des Körpers mit einer wärmeleitenden Packung (10) versehen ist, die in ihrem Inneren von oben nach unten vertikale Zwischenräume frei läßt, daß der Behälter eine Gaseintrittsöffnung (8) unterhalb des unteren Endes der Packung sowie eine Gasaustrittsöffnung (11) oberhalb der Packung umfaßt, und daß der Behälter mit Heizmitteln (6, 7) versehen ist, während der Sammelboden (5) unterhalb der Öffnung (8) angeordnet ist.

2. Vorrichtung nach Anspruch 1, dadurch gekennzeichnet, daß die Packung (10) aus zumindest einer zusammengerollten Metallfolie besteht, die einen zu dem Körper des Behälters (1) parallelen Zylinder mit einem Außendurchmesser bildet, der im wesentlichen gleich dem Innendurchmesser des Körpers (2) ist.

3. Vorrichtung nach Anspruch 1 oder 2, dadurch gekennzeichnet, daß die Packung ein Hohlzylinder ist, und daß der Behälter einen zylindrischen hohlen Hilfskörper (3) umfaßt, der unten im wesentlichen in Höhe der Packung verschlossen und achsgleich zu dem Behälter im freien Raum der zylindrischen Packung (10) angeordnet ist, wobei der ringförmige Deckel (4) des Behälters diesen dicht verschließt.

4. Vorrichtung nach einem der Ansprüche 1 bis 3, dadurch gekennzeichnet, daß die Packung aus einer Kupferfolie besteht.

5. Vorrichtung nach einem der Ansprüche 1 bis 4, dadurch gekennzeichnet, daß die Höhe der Packung näherungsweise 1m, der Innendurchmesser des Behälters näherungsweise 0,20m und der Durchmesser des Hilfskörpers etwa 0,08m betragen.

6. Vorrichtung nach einem der Ansprüche 1 bis 5, dadurch gekennzeichnet, daß die Kupferfolie näherungsweise 0,5mm dick ist, und daß die freien Zwischenräume zwischen den Folien etwa einen Millimeter breit sind.

7. Vorrichtung nach einem der Ansprüche 1 bis 6, dadurch gekennzeichnet, daß die Heizmittel aus einem in dem Hilfskörper angeordneten elektrischen Widerstand (3) und/oder einem außen um den Hauptkörper gewickelten elektrischen Widerstand (7) bestehen.

8. Vorrichtung nach einem der Ansprüche 1 bis 7, dadurch gekennzeichnet, daß der hohle Boden (5) des Behälters abnehmbar ist.

9. Vorrichtung nach einem der Ansprüche 1 bis 8, dadurch gekennzeichnet, daß der Behälter (1) aus einer Ni-Cr-Legierung besteht.

10. Vorrichtung nach einem der Ansprüche 1 bis 9, dadurch gekennzeichnet, daß der Behälter mit Mitteln zur thermischen Isolierung versehen ist.

11. Anlage zum Pumpen von Gasen im Zusammenhang mit einem mit gasförmigen Verbindungen hochschmelzender Metalle arbeitenden Verfahren, insbesondere einem Verfahren zur chemischen Abscheidung aus der Dampfphase, dadurch gekennzeichnet, daß die Anlage eine Vorrichtung nach einem der Ansprüche 1 bis 10 umfaßt.

12. Verfahren zum Einfangen gasförmiger Verbindungen hochschmelzender Metalle, dadurch gekennzeichnet, daß man die gasförmigen Verbindungen an der Unterseite eines langgestreckten, vertikal angeordneten, von einem zylindrischen Hohlkörper gebildeten und mit einer wärmeleitenden Packung versehenen Behälters einleitet, die gasförmigen Verbindungen in Kontakt mit der Packung bringt, die Temperatur des Behälters auf einen Wert zwischen 350°C und 850°C bringt, und die erhaltenen Abgase über eine oberhalb der Packung angeordnete Öffnung abführt.

13. Verfahren nach Anspruch 12, dadurch gekennzeichnet, daß die Packung aus zumindest einer Kupferfolie besteht.

14. Verfahren nach einem der Ansprüche 12 oder 13, dadurch gekennzeichnet daß die die gasförmigen Verbindungen bildenden hochschmelzenden Metalle W, Mo und Ti sind.

15. Verfahren nach einem der Ansprüche 12 bis 14, dadurch gekennzeichnet, daß die gasförmigen Verbindungen Fluoride von W, Mo oder Ti sind.

16. Verfahren nach einem der Ansprüche 12 bis 15, dadurch gekennzeichnet, daß man die Abgase in eine Ölfalle einleitet.
